(19)

Europäisches
Patentamt
European
Patent Office
Office européen
des brevets

(11) **EP 2 582 161 A1**

(12) **EUROPEAN PATENT APPLICATION**

(43) Date of publication:
**17.04.2013 Bulletin 2013/16**

(21) Application number: **12188052.0**

(22) Date of filing: **10.10.2012**

(51) Int Cl.:
*H04W 4/02* (2009.01)        *H04L 29/08* (2006.01)
*G06Q 20/16* (2012.01)      *G06Q 30/02* (2012.01)
*H04W 4/20* (2009.01)      *H04W 4/08* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.10.2011   KR 20110103414**

(71) Applicant: **Samsung Electronics Co., Ltd
Gyeonggi-do 443-742 (KR)**

(72) Inventors:
• **Ryu, Je-Hyok
   Gyeonggi-do (KR)**

• **Oh, Joon-Seop
   Gyeonggi-do (KR)**
• **Song, Eun-Young
   Gyeonggi-do (KR)**
• **Park, Young-Hee
   Seoul (KR)**

(74) Representative: **Harrison Goddard Foote
Saviour House
9 St. Saviourgate
York
YO1 8NQ (GB)**

(54) **Distance-based collective discount apparatus and method of portable terminal**

(57)     A distance-based collective discount apparatus and method of a portable terminal. The method includes receiving, from a server, a range of a first specific region and information of a purchase item purchasable if a user terminal is located within the first specific region or a second specific region included in the first specific region. The method also includes receiving an input of an interested item among the information on the purchase item, and transmitting information of the interested item to the server. The method further includes receiving update information on the interested item from the server, and transmitting a confirmation intention about the interested item to the server.

FIG.4

EP 2 582 161 A1

**Description**

**TECHNICAL FIELD OF THE INVENTION**

The present disclosure relates to a distance-based collective discount apparatus and method of a portable terminal.

**BACKGROUND OF THE INVENTION**

As functions of a portable terminal continue to improve, the terminal may be able to share location information with each other or purchase things desired by a user. An example is 'the place of Facebook' and 'the latitude of Google'.
In more detail, the terminal can share a discount with a previously registered friend, and get the discount in a retail store and restaurant desired by the user. Also, the terminal can locate a friend close to the user, and display a location of the user too.
But, the aforementioned example corresponds to a location-based service focused on a member who has already joined in each service provider. Accordingly, there is an inconvenience that a user who has not previously joined membership has to register as a member with each service provider.
Also, there is a problem that a privacy issue may be raised regarding the collection of user personal information.

**SUMMARY OF THE INVENTION**

To address the above-discussed deficiencies of the prior art, it is a primary object to provide at least the advantages below. Accordingly, one aspect of the present disclosure is to provide a distance-based collective discount apparatus and method of a portable terminal, for setting a specific region called a Collective Discount Region (CDR) and, as user terminals gather closer to the collective discount region, directly purchasing goods cheaply.
Another aspect of the present disclosure is to prevent a privacy issue using a location-based service focused on a device rather than a location-based service based on user personal information.
The above aspects are achieved by providing a distance-based collective discount apparatus and method of a portable terminal.
According to one aspect of the present disclosure, a distance-based collective discount method of a portable terminal is provided. The method includes receiving, from a server, a range of a first specific region and information of a purchase item purchasable if a user terminal is located within the first specific region or a second specific region included in the first specific region. The method also includes receiving an input of an interested item among the information on the purchase item, and transmitting the interested item to the server. The method further includes receiving update information on the interested item from the server, and transmitting a confirmation intention about the interested item to the server.
In the embodiment of the present disclosure, the update information comprises a list of interested goods, a discount achievement period, a reach of discount, and a discount rate.
In the embodiment of the present disclosure, the confirmation intention about the interested item comprises information that the terminal approaches the second specific region and, in a state of updating a reach of discount for the interested item as a value of the same or different reach of discount, transmits an ID of the terminal and a location to the server.
According to another aspect of the present disclosure, a distance-based collective discount method of a portable terminal is provided. The method includes receiving, from a seller, a range of a first specific region and information of a purchase item that a user terminal can purchase if the user terminal is located within the first specific region or a second specific region included in the first specific region. The method also includes transmitting the information of the purchase item to the terminal. The method further includes receiving an interested item among the information of the purchase item from the terminal. The method still further includes receiving update information from the seller, and transmitting the update information to the terminal, and receiving a confirmation intention about the interested item from the terminal.
In the embodiment of the present disclosure, the information of the purchase item comprises information on a target reach of discount, a discount achievement period, a list of goods, a price of goods, and a discount rate.
In the embodiment of the present disclosure, the method further includes receiving the interested item from the terminal, determining a reach of discount, and, while the terminal is located in the first specific region, updating the reach of discount periodically or whenever there is a change of a position of the terminal.
In the embodiment of the present disclosure, the reach of discount is decided according to the equation below:

$$\mu(X) = \frac{Y - X}{Y} \pm \beta$$

where, $\mu(X)$: reach of discount,

> X: distance from a user terminal located in a first specific region to a boundary of a second specific region,
> Y: distance from a boundary of the first specific region to the boundary of the second specific region, and
> $\beta$: difference between a real location of a user terminal and a location measured by a global positioning system.

In the embodiment of the present disclosure, the method further includes receiving an identity (ID) of the terminal and location information from the terminal, and storing the ID and location information together with time data.

In the embodiment of the present disclosure, the update information comprises at least one of: goods related information of a new contract, discount sale completion information, and new seller information.

In the embodiment of the present disclosure, the method further include transmitting the confirmation of a target discount sale to the terminal and the seller, receiving a purchase confirmation intention about the interested item from the terminal and connecting the terminal to a payment system of the seller so that the terminal can make payment.

In the embodiment of the present disclosure, the confirmation of the target discount sale is decided according to the equation below:

$$\frac{\sum_{i=1}^{p} \mu_i(X)}{Z} = 1$$

where

> $\mu_i(X)$: reach of discount in a location (X) of a user terminal (i),
> p: total number of user terminals joining a collective discount, and
> Z: target reach of discount set to meet a discount.

In the embodiment of the present disclosure, the method further include receiving a purchase confirmation intention about the interested goods from the terminal and connecting the terminal to a payment system of the seller so that the terminal can make payment.

According to another aspect of the present disclosure, a distance-based collective discount apparatus of a portable terminal is provided. The apparatus includes a communication module configured to receive, from a server, a range of a first specific region and information of a purchase item purchasable if a user terminal is located within the first specific region or a second specific region included in the first specific region, an input unit configured to receive an input of an interested item among the information on the purchase item, a storage unit configured to receive update information on the interested item from the server, and storing the update information and a controller configured to control a confirmation intention about the interested item to the server.

In the embodiment of the present disclosure, the update information comprises a list of interested goods, a discount achievement period, a reach of discount, and a discount rate.

In the embodiment of the present disclosure, the confirmation intention about the interested item comprises information that the terminal approaches the second specific region and, in a state of updating a reach of discount for the interested item as a value of the same or different reach of discount, transmits an ID of the terminal and a location to the server.

A distance-based collective discount apparatus of a portable terminal, the apparatus comprising a server. The server includes a data manager configured to receive, from a seller, a range of a first specific region and information of a purchase item that a user terminal can purchase if the user terminal is located within the first specific region or a second specific region included in the first specific region, and store the range of a first specific region and the information of the purchase item and a message manager configured to transmit the information of the purchase item to the terminal, receive an interested item among the information of the purchase item, from the terminal, receive update information from the seller, transmit the update information to the terminal, and receive a confirmation intention about the interested item from the terminal.

In the embodiment of the present disclosure, the information of the purchase item comprises information on a target reach of discount, a discount achievement period, a list of goods, a price of goods, and a discount rate.

In the embodiment of the present disclosure, the server further includes a data processor configured to receive the interested item from the terminal, determine a reach of discount and, while the terminal is located in the first specific region, update the reach of discount periodically or whenever there is a change of a position of the terminal.

In the embodiment of the present disclosure, the reach of discount is decided according to the equation below:

$$\mu(X) = \frac{Y - X}{Y} \pm \beta$$

where

$\mu(X)$: reach of discount,
X: distance from a user terminal located in a first specific region to a boundary of a second specific region,
Y: distance from a boundary of the first specific region to the boundary of the second specific region, and
$\beta$: difference between a real location of a user terminal and a location measured by a global positioning system.

In the embodiment of the present disclosure, the message manager is configured to receive an identity (ID) of the terminal and location information from the terminal, and store the ID and location information together with time data.

In the embodiment of the present disclosure, the update information comprises at least one of: goods related information of a new contract, discount sale completion information, and new seller information.

In the embodiment of the present disclosure, the message manager is configured to transmit the confirmation of a target discount sale to the terminal and the seller, receive a purchase confirmation intention about the interested item from the terminal, and connect the terminal to a payment system of the seller so that the terminal can make payment.

In the embodiment of the present disclosure, the confirmation of the target discount sale is decided according to the equation below:

$$\frac{\sum_{i=1}^{p} \mu_i(X)}{Z} = 1$$

where

$\mu_i(X)$: reach of discount in a location (X) of a user terminal (i),
p: total number of user terminals joining a collective discount, and
Z: target reach of discount set to meet a discount.

In the embodiment of the present disclosure, the message manager is configured to receive a purchase confirmation intention about the interested goods from the terminal, and connect the terminal to a payment system of the seller so that the terminal can make payment.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**BRIEF DESCRIPTION OF THE DRAWINGS**

For a more complete understanding of the present disclosure and its advantages, reference is now made to the following description taken in conjunction with the accompanying drawings, in which like reference numerals represent like parts:

FIG. 1 is a block diagram illustrating a distance-based collective discount apparatus of a portable terminal according to an embodiment of the present disclosure;

FIG. 2 is a block diagram illustrating a server in a distance-based collective discount apparatus of a portable terminal according to an embodiment of the present disclosure;

FIG. 3 is a diagram illustrating the relationship between a distance of a terminal located in a collection discount region and a region for collective distance taking, in a distance-based collective discount method of a portable terminal according to an embodiment of the present disclosure;

FIG. 4 is a flowchart illustrating a distance-based collective discount process in a distance-based collective discount method of a portable terminal according to an embodiment of the present disclosure;

FIGS. 5A and 5B are diagrams illustrating one implementation of an index of a distance-based collective discount method of a portable terminal according to the present disclosure; and

FIG. 6 is a diagram illustrating one implementation of a distance-based collective discount application, in a distance-based collective discount method of a portable terminal according to the present disclosure.

**DETAILED DESCRIPTION OF THE INVENTION**

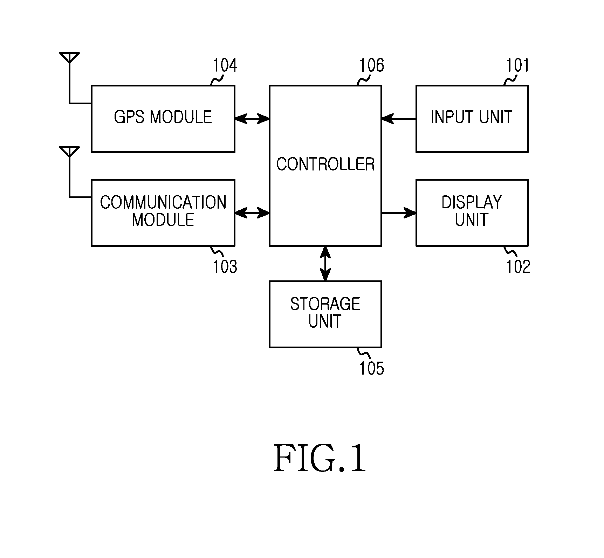

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. Preferred embodiments of the present disclosure will be described herein below with reference to the accompanying drawings. In the following description, well-known functions or constructions are not described in detail since they would obscure the disclosure in unnecessary detail. Also, parts performing like function and operations are denoted by the same symbols throughout the drawings.

FIG. 1 is a block diagram illustrating a construction of a distance-based collective discount apparatus of a portable terminal according to an embodiment of the present disclosure.

As illustrated in FIG. 1, the distance-based collective discount apparatus of the portable terminal can include an input unit 101, a display unit 102, a communication module 103, a Global Positioning System (GPS) module 104, a storage unit 105, and a controller 106.

The input unit 101 provides input data generated by user's selection, to the controller 106. For example, the input unit 101 receives an input of an interested item among information on a purchase item, from a user. Also, if the controller 106 inquires of the user whether to transmit an identity (ID) of the terminal and location information to a server, the controller 106 receives an input of a consent command from the user.

The display unit 102 displays status information of the portable terminal, a menu screen, and other information. For example, the display unit 102 displays information of a peripheral Collective Discount Region (CDR), information (e.g., a list, a discount achievement period, and a sum (being determined as a collective distance) of reaches of discount of discount purchase interests) of an interested object (i.e., goods or service) intended for purchasing, and information on a discount rate.

The communication module 103 processes a signal transmitted or received through an antenna for voice and data communication. For example, the communication module 103 receives, from a server, a range of a first specific region and information of a purchase item purchasable if a user terminal is located within the first specific region or a second specific region included in the first specific region, transmits an ID of the terminal and location information to the server, and receives the confirmation of a target discount sale from the server. Also, the communication module 103 receives the confirmation of the target discount sale the server and, if the terminal is located in a third specific region including the range of the first specific region, the communication module 103 receives the range of the first specific region and the information of the purchase item from the server.

The GPS module 104 receives location information of the terminal from a GPS satellite, and transmits the location information to the server.

If the communication module 103 receives update information about an interested item from the server, the storage unit 105 stores the update information. Here, the update information can be, for example, information of a reach of discount collected up to now, update information of timing when a discount purchase is possible by the reach of discount, information of a new service object and the like.

The controller 106 controls the general operation of the portable terminal. For example, the controller 106 confirms a purchase intention about an interested item, inquires of a user whether to transmit an ID of a terminal and location information to the server, receives an input of the purchase intention about the interested item from the user for control, and connects the terminal to a payment system of a seller by means of the server.

In the aforementioned construction, the controller 106 can perform the general functions of the terminal. In the present disclosure, these are separately constructed and shown in order to distinguish and describe respective functions. Accordingly, in a situation where product is actually realized, construction can be such that all the functions of the terminal are processed in the controller 106, or construction can be such that only some of the functions are processed in the controller 106.

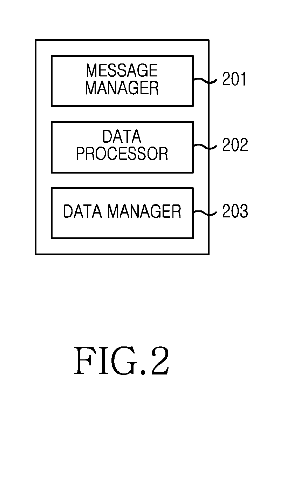

FIG. 2 is a block diagram illustrating a construction of a server in a distance-based collective discount apparatus of a portable terminal according to an embodiment of the present disclosure.

As illustrated in FIG. 2, the server can include a message manager 201, a data processor 202, and a data manager 203.

The message manager 201 manages location information of a terminal and a message received from a communication module of the terminal. For example, the message manager 201 transmits information of a purchase item to the terminal, receives an interested item among the purchase item information from the terminal, receives update information from a seller, transmits the update information to the terminal, and receives a confirmed purchase intention about the interested item from the terminal. Also, the message manager 201 receives an ID of the terminal and location information from the terminal to store together with time data, transmits the confirmation of a target discount sale to the terminal and the seller, receives a confirmed purchase intention about interested goods from the terminal, and connects the terminal to a payment system of the seller so that the terminal can make payment.

The data processor 202 analyzes, updates, and processes a message of the message manager 201. For example, the data processor 202 receives information about an interested item from a terminal, determines a reach of discount and, while the terminal is located in a first specific region, updates the reach of discount periodically or whenever there is a change of a location of the terminal.

The data manager 203 stores a log received from a terminal or log information processed by the data processor 202, receives data from a seller and stores the data, and transmits the data to the terminal through the message manager 201. For example, the data manager 203 receives, from the seller, a range of a first specific region and information of a purchase item that a user terminal can purchase if the user terminal is located in the first specific region or a second specific region included in the first specific region, and stores the range of the first specific region and the information of the purchase item.

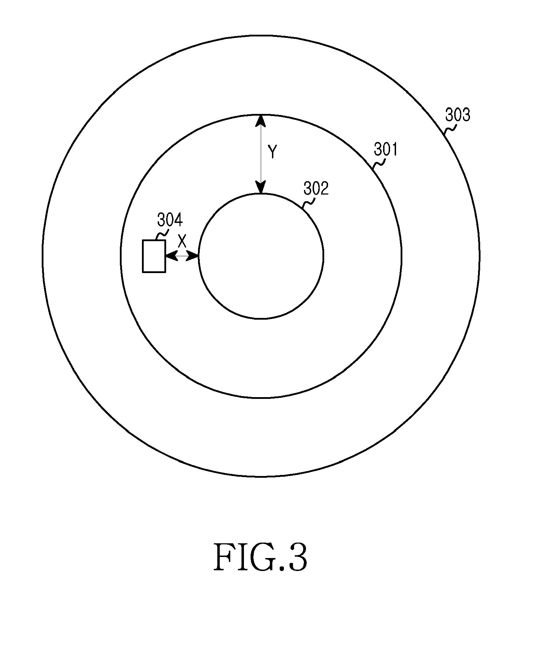

FIG. 3 is a diagram illustrating the relationship between a distance of a terminal located in a collection discount region and a region for collective distance taking, in a distance-based collective discount method of a portable terminal according to an embodiment of the present disclosure.

As illustrated in FIG. 3, there are three different regions. Among the three regions, a second specific region 302 denotes the center smallest region, a third specific region 303 denotes the largest region, and a first specific region 301 denotes a region located between the second specific region 302 and the third specific region 303.

The second specific region 302 can be at least one of a seller's store, an existing target marketing area, a new target marketing area, and an area having an object for gathering users in the area during an interim period. That is, the second specific region 302 can be a tangible store in which a seller sells things, an existing marketing area for intangible service, or a new area in which a marketing area has not yet been formed. Accordingly, the seller can set the second specific region 302 to not only the tangible store but also an intangible marketing area and further a new region or area in which a marketing area has not yet been formed. The seller can attempt a discount sale for an object item in the second specific region 302, thus being capable of enhancing competitiveness and reducing an economic burden.

The first specific region 301 includes the second specific region 302 and is included in the third specific region 303. If a user terminal 304 is located in the first specific region 301 and transmits information about an interested item and a purchase participation intention to a server, when goods associated with the purchase participation intention meet a target discount condition, the user terminal 304 can purchase the goods at a discount price. Although the user terminal 304 is located in the third specific region 303, not the first specific region 301, the user terminal 304 can receive information on the first specific region 301, a collective discount region, and a sale item from the server. This is because the third specific region 303 is a region close to the first specific region 301 that is the collective discount region. Accordingly, if there are goods or services that a user desires to purchase among the sale items that the user has received from the server, the user can move to the first specific region 301 out of the third specific region 303, and perform a procedure for purchasing the goods or service at a discount price.

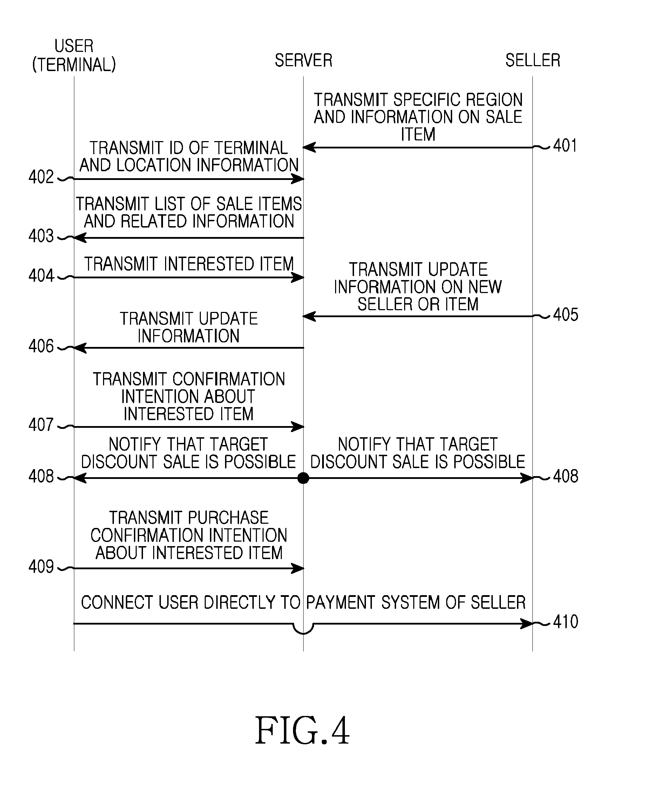

FIG. 4 is a flowchart illustrating a distance-based collective discount process in a distance-based collective discount method of a portable terminal according to an embodiment of the present disclosure. The distance-based collective discount process according to the present disclosure is possible for not only a portable terminal but also a fixed terminal that is located in a discount area. In a situation where a seller selects a collective discount region (i.e., a first specific region) and a user terminal is located within the selected first specific region, the seller will sell goods or service to a user at a discounted price, when a preset target condition is met. Also, the seller designates a second specific region included in the first specific region, and designates a third specific region including the first specific region. That is, the seller designates the third specific region including the first specific region, and designates the first specific region including the second specific region. As described above, in a situation where the first specific region is the collective discount region and the user terminal is located in the first specific region, the user can purchase goods or service from the seller at a discounted price, when the preset target condition is met. The second specific region can be at least one of a seller's store, an existing target marketing area, a new target marketing area, and an area having an object for gathering users in the area during an arbitrary time.

As illustrated in FIG. 4, a seller transmits information for setting the above specific regions and information on a sale item (i.e., a purchase item in view of a user), to a server (operation 401). The information on the sale item includes information on a target reach of discount, a discount achievement period, a price of goods, and a discount rate. The target reach of discount refers to a value set by the seller to meet a discount. The discount achievement period is a discount period set by the seller. During the discount achievement period, a user can get a collective discount.

If the user intending to get the collective discount inputs a command to execute a related program to a terminal, the terminal inquires of the user about giving a consent, before transmitting an ID of the terminal and location information to the server. If the user gives the consent, the terminal transmits the ID of the terminal and the location information to the server (operation 402). The ID of the terminal may be modified in the terminal before being transmitted and stored in the server for personal information protection. In the present disclosure, it is assumed that the ID of the terminal stored in the server is the modified ID, and, in some embodiments, only the terminal may know that the modified ID is for which user. The server receives the ID of the terminal and the location information, and stores them together with time data.

The server receiving the ID of the terminal and the location information retrieves a collective discount region (i.e., a first specific region) closest to the user terminal, and transmits the information on the collective discount region and sale item, which are received from the seller, to the user terminal (operation 403). If the user terminal is located out of a range of the collective discount region (i.e., the first specific region), the user terminal is not able to receive the information on the collective discount region and sale item from the server. However, if the user terminal is located in the aforementioned third specific region preset by the seller, the server transmits the related information even to the user terminal located in the third specific region. This is because the user terminal having received the related information may move inside the first specific region that is close to the third specific region in which the user terminal is located.

The user receiving the information on the collective discount region and sale item retrieves a location of the collective discount region and the sale item and, if there is an interested item, the user transmits information about the interested item to the server (operation 404). If the user is located in the third specific region, the user can move to the collective discount region (i.e., the first specific region) close to the third specific region and join a collective discount. The server receiving the interested item determines a reach of discount of the terminal having transmitted the interested item. While the user terminal is located in the collective discount region (i.e., the first specific region), the reach of discount can be determined and updated periodically or whenever there is a change of a location of the terminal. The reach of discount is decided according to Equation 1 below.

$$\mu(X) = \frac{Y-X}{Y} \pm \beta \qquad\qquad [\text{Eqn. 1}]$$

In Equation 1, '$\mu(X)$' is a reach of discount, i.e., a membership function determined to collectivize distances by locations of several user terminals in a specific region targeting a discount, 'X' is a distance from a user terminal located in a first specific region to a boundary of a second specific region, 'Y' is a distance from a boundary of the first specific region to the boundary of the second specific region, and '$\beta$' is a difference between a real location of a user terminal and a location measured by a global positioning system.

In a detailed description of Equation 1, it can be appreciated that the reach of discount increases as the user terminal goes to the boundary of the second specific region within the first specific region. That is, as the user terminal approaches the second specific region within the first specific region, the reach of discount increases. Although a description is made later in detail through Equation 2, as the reach of discount increases, it reaches a discount rate that a seller targets. The increase of the reach of discount not only results in the reach of the discount rate that the seller targets but also is used in a situation where the user is provided with a service and the like in the second specific region. For example, in a situation where a user who arrives at the second specific region (e.g., a seller's restaurant) within a specific time can have a meal at a discounted price, the reach of discount increases.

The seller can transmit new update information to the server (operation 405). The new update information can be goods related information of a new contract, information related to discount sale completion and the like, or information of a new seller. For example, in a situation where there are new goods or services that, although initially not included in a sale item, will be sold by the seller, or in a situation where there is a new seller who will join a collective discount, the seller transmits new update information to the server. Also, in a situation where a target discount sale of the seller is completed, the seller transmits new update information to a new user and notifies the new user that the target discount sale has completed.

If the server receives the new update information from the seller, the server transmits newly received information and updated information to the user terminal (operation 406). In detail, the server periodically or in real-time transmits server update information changing in real-time according to a change of a participation user, for example, a list of interested goods selected by the participation user, a discount achievement period, a reach of discount of the participation user, and a discount rate, to the user terminal. For example, the server can transmit a message such as "2011.09.30@CDR-A:SamsungTV, 980-1000, 10-15", to the user terminal. The message includes information that a collective discount period for a Samsung TV in a CDR-A area is until 09-30-2011 and, if a reach of discount is accomplished up to 1000 from currently gathered 980, a discount rate increases from current 10% to target 15%.

The user receiving the update information from the server can transmit a confirmation intention about the interested item to the server (operation 407). The confirmation intention about the interested goods refers to an intention that the user terminal approaches the second specific region and, in a state of updating the reach of discount for the interested item, transmits a location of the user terminal to the server. That is, the confirmation intention about the interested goods is an intention that, after receiving the update information on the interested item from the server or at any time within a discount achievement period, the user sees a changed reach of discount displayed in the terminal, again joins and updates the reach of discount of the interested item (for example, to confirm participation with a reach of discount increased at a current location), and transmits a location of the user terminal to the server. Accordingly, the confirmation intention about the interested item is not an essential process but is a process omissible if a purchase intention about the interested item first selected by the user appears or becomes low.

After that, after receiving interested items from several users, if it is determined that a target discount sale of the seller is possible, the server notifies the user terminal and the seller of the confirmation of the target discount sale (operation 408). Here, the confirmation of the target discount sale is decided according to Equation 2 below.

$$\frac{\sum_{i=1}^{p} \mu_i(X)}{Z} = 1 \qquad \text{[Eqn. 2]}$$

In Equation 2 above, the '$\mu_i(X)$' is a reach of discount in a location (X) of a user terminal (i), the 'p' is the total number of user terminals joining a collective discount, and the 'Z' is a target reach of discount set to meet a discount.

In a detailed description of Equation 2, it can be appreciated that, as a reach of discount of a terminal increases, a possibility that a target discount sale will be confirmed increases. That is, as several user terminals approach the second specific region, the confirmation of the target discount sale is achieved more quickly. Undoubtedly, as a set target reach of discount decreases, the confirmation of the target discount sale is achieved within a shorter time.

The user receiving the confirmation of the target discount sale transmits a purchase confirmation intention about the interested item to the server (operation 409). The purchase confirmation intention about the interested item is the declaration of intention in which an initial user will finally purchase the interested item after transmitting the interested item to the server. Accordingly, if the user transmits the purchase confirmation intention about the interested item to the server, the server enables the user terminal to connect directly to a payment system of the seller (operation 410).

In an embodiment, the server is able to notify the user and the seller that the target discount sale is possible. However, this process (operation 408) may be omitted in a situation where the target discount sale has not been confirmed.

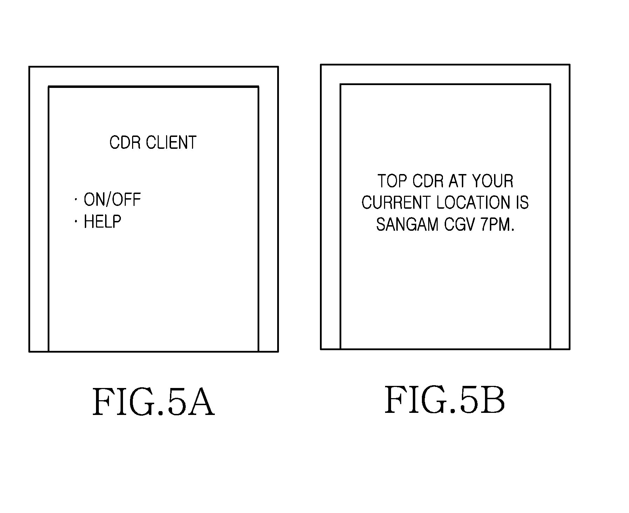

FIGS. 5A and 5B are diagrams illustrating one implementation of an index of a distance-based collective discount method of a portable terminal according to the present disclosure. A user who intends to get a distance-based collective discount opens a distance-based collective discount application, and selects ON. A terminal opening the distance-based collective discount application can not only join the distance-based collective discount but also can receive, from a server, recommendation information about an interested item in which other users join most often. The recommendation information, which is an accumulation of information that other users join a collective discount, refers to information by the highest participation rate in each specific region. Accordingly, the user can use the recommendation information received from the server, as index information on an economic life.

For example, as illustrated in FIGS. 5A and 5B, while a user operating a portable terminal moves, the user opens a distance-based collective discount application so as to check a distance-based collective discount region closest to a current location of the user and information on a sale item. If the collective discount application is opened, the user can receive recommendation information updated in the server, from the server. Assuming that the user operating the terminal currently opens the collective discount application near Sangam-dong, Seoul, the server can analyze accumulated information and transmit the recommendation information '7 p.m. of Sangam-dong CGV cinema' as top index information, to the terminal. The top index information can be information notifying that it is goods of the highest discount participation according to the present disclosure, an area, and time. Accordingly, the user can move to 'Sangam-dong CGV cinema' that is a collective discount region, and pay attention to related movie ticket purchasing. That is, an economic activity of purchasing a movie ticket of 'Sangam-dong CGV cinema' increases in the corresponding area, and this behavior can be a base capable of generating a higher discount rate and wider region setting from the user and the seller. Also, if the top index information is information of the highest participation in Seoul, the top index information can be used even as information of a supplementary service. For example, even an implementation is possible in which the seller can sell the top index information as a popular economic life index to a local broadcasting station and gain advertising profits.

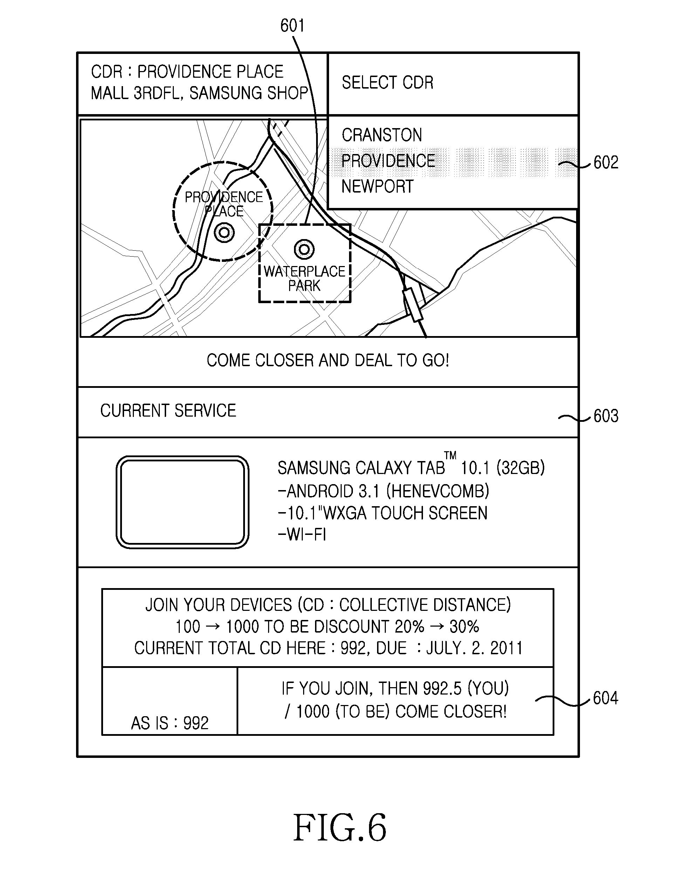

FIG. 6 is a diagram illustrating one implementation of a distance-based collective discount application in a distance-based collective discount method of a portable terminal according to the present disclosure.

As illustrated in FIG. 6, assume that a user is now located in 'Water Place Park' and is scheduled to meet a friend at 'Providence Place' after a while. The user who is experienced in joining a collective discount opens a collective discount application so as to check if there is information on the collective discount at the current location 'Water Place Park' or near the appointment location 'Providence Place'.

If the user opens the collective discount application, 'Water Place Park' in which the user is now located is displayed (601). After that, if the user selects the appointment location 'Providence Place' as a target location and inputs it to the terminal, the current location 'Water Place Park', the appointment location 'Providence Place', and a list of collective discount regions of easy place approach are displayed (602). That is, a list of neighboring collective discount regions serviceable in a location of the user is displayed. If the user selects the appointment location 'Providence Place' in the displayed list, a current service item whose collective discount is in execution near the appointment location 'Providence Place' is displayed (603). For example, the user identifies that a collective discount is in execution with regard to 'Samsung Galaxy Tab' in a store near 'Providence Place' and has not yet been completed (604). That is, if the user currently joins a collective discount in the current location 'Water Place Park', the user can identify that a target reach of discount can raise 992 up to 992.5 among 1,000 collective distances. The user who intends to purchase the 'Samsung Galaxy Tab' selects an item of 'Samsung Galaxy Tab' and joins the collective discount for the 'Samsung Galaxy Tab'. The user is scheduled to go to the appointment location 'Providence Place' at an appointment time, so the user gets on a vehicle and moves to the appointment location 'Providence Place'. During the movement, the user identifies that a reach of discount increases to 993 higher than the previous 992.5 through an automatic notification of the collective discount application. The user who arrives at the appointment location 'Providence Place' transmits a confirmation intention about an interested item to the server in the present appointment location 'Providence Place', for the sake of quicker discount target achievement.

After that, the user receives a notification that a discount sale is possible because a target discount condition of the interested item is satisfied, from the collective discount application. That is, the notification indicates that 1,000 collective distances joining a reach of discount are gathered and a 30 % discount is decided. If the user receiving the notification transmits a purchase confirmation intention about the interested item, the user is connected directly to a payment system of a seller. The user who completes payment according to the payment system of the seller gets in a store of the seller and takes the 'Samsung Galaxy Tab'.

As in the aforementioned exemplary embodiments, the present disclosure is applicable to not only goods but also locations such as on-demand serviceable restaurants, play, and service facilities. Also, even an implementation of attracting clients to a corresponding area for multiple reasons is possible. For example, the present disclosure may attract many clients to a model house for real estate sale while selling other free gifts at a low price using a collective discount system in order to invite clients to the model house for real estate sale.

Embodiments of the present invention according to the claims and description in the specification can be realized in the form of hardware, software or a combination of hardware and software.

Such software may be stored in a computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the disclosure has been shown and described with reference to certain preferred embodiments thereof, it will be understood by those skilled in the art that various changes in form and details may be made therein without departing from the spirit and scope of the disclosure as defined by the appended claims.

**Claims**

1.   A distance-based collective discount method of a portable terminal, the method comprising:

   receiving, from a server, a range of a first specific region and information of a purchase item purchasable if a user terminal is located within the first specific region or a second specific region included in the first specific region;
   receiving an input of an interested item among the information on the purchase item, and transmitting information of the interested item to the server;
   receiving update information on the interested item from the server; and
   transmitting a confirmation intention about the interested item to the server.

2.   The method of claim 1, further comprising:

   inquiring of a user whether to transmit an identity (ID) of the terminal and location information to the server; and
   receiving an input of a consent command from the user, and transmitting the ID and location information to the server.

3.   The method of claim 1, wherein the information of the purchase item comprises information on a target reach of discount, a discount achievement period, a list of goods, a price of goods, and a discount rate.

4.   The method of claim 1, wherein the update information comprises a list of interested goods, a discount achievement period, a reach of discount, and a discount rate,
   wherein the reach of discount is decided according to the equation below:

$$\mu(X) = \frac{Y - X}{Y} \pm \beta$$

   where

   $\mu(X)$: reach of discount,
   X: distance from a user terminal located in a first specific region to a boundary of a second specific region,
   Y: distance from a boundary of the first specific region to the boundary of the second specific region, and
   $\beta$: difference between a real location of a user terminal and a location measured by a global positioning system.

5.   The method of claim 1, wherein the confirmation intention about the interested item comprises information that the terminal approaches the second specific region and, in a state of updating a reach of discount for the interested item as a value of the same or different reach of discount, transmits an ID of the terminal and a location to the server,
   wherein the reach of discount is decided according to the equation below:

$$\mu(X) = \frac{Y - X}{Y} \pm \beta$$

   where

   $\mu(X)$: reach of discount,

X: distance from a user terminal located in a first specific region to a boundary of a second specific region,
Y: distance from a boundary of the first specific region to the boundary of the second specific region, and
β: difference between a real location of a user terminal and a location measured by a global positioning system.

6. The method of claim 1, further comprising:

receiving the confirmation of a target discount sale from the server;
transmitting a purchase confirmation intention about the interested item to the server; and
connecting the terminal to a payment system of a seller,
wherein the confirmation of the target discount sale is decided according to the equation below:

$$\frac{\sum_{i=1}^{p} \mu_i(X)}{Z} = 1$$

where

$\mu_i(X)$: reach of discount in a location (X) of a user terminal (i),
p: total number of user terminals joining a collective discount, and
Z: target reach of discount set to meet a discount.

7. The method of claim 1, further comprising:

transmitting the purchase confirmation intention about the interested item to the server; and
connecting the terminal to a payment system of a seller.

8. The method of claim 1, further comprising, if the terminal is located in a third specific region including the range of the first specific region, receiving the range of the first specific region and the information on the purchase item from the server.

9. A distance-based collective discount apparatus of a portable terminal, the apparatus comprising:

a communication module configured to receive, from a server, a range of a first specific region and information of a purchase item purchasable if a user terminal is located within the first specific region or a second specific region included in the first specific region;
an input unit configured to receive an input of an interested item among the information on the purchase item;
a storage unit configured to receive update information on the interested item from the server, and storing the update information; and
a controller configured to control a confirmation intention about the interested item to the server.

10. The apparatus of claim 9, wherein the controller is configured to store an identity (ID) of the terminal and a modified ID made using the ID in the storage unit, and inquire of a user whether to transmit the modified ID of the terminal and location information to the server,
the input unit is configured to receive an input of a consent command from the user, and
the communication module is configured to transmit the ID and location information to the server.

11. The apparatus of claim 9, wherein the information of the purchase item comprises information on a target reach of discount, a discount achievement period, a list of goods, a price of goods, and a discount rate.

12. The apparatus of claim 9, wherein the update information comprises a list of interested goods, a discount achievement period, a reach of discount, and a discount rate.
wherein the reach of discount is decided according to the equation below:

$$\mu(X) = \frac{Y - X}{Y} \pm \beta$$

where

$\mu(X)$: reach of discount,

X: distance from a user terminal located in a first specific region to a boundary of a second specific region,

Y: distance from a boundary of the first specific region to the boundary of the second specific region, and

$\beta$: difference between a real location of a user terminal and a location measured by a global positioning system.

13. The apparatus of claim 9, wherein the confirmation intention about the interested item comprises information that the terminal approaches the second specific region and, in a state of updating a reach of discount for the interested item as a value of the same or different reach of discount, transmits an ID of the terminal and a location to the server, wherein the reach of discount is decided according to the equation below:

$$\mu(X) = \frac{Y - X}{Y} \pm \beta$$

where

$\mu(X)$: reach of discount,

X: distance from a user terminal located in a first specific region to a boundary of a second specific region,

Y: distance from a boundary of the first specific region to the boundary of the second specific region, and

$\beta$: difference between a real location of a user terminal and a location measured by a global positioning system.

14. The apparatus of claim 9, wherein the communication module is configured to receive the confirmation of a target discount sale, from the server, and transmit a purchase confirmation intention about the interested item, to the server, and

the controller is configured to connect the terminal to a payment system of a seller by the server,

wherein the confirmation of the target discount sale is decided according to the equation below:

$$\frac{\sum_{i=1}^{p} \mu_i(X)}{Z} = 1$$

where

$\mu_i(X)$: reach of discount in a location (X) of a user terminal (i),

p: total number of user terminals joining a collective discount, and

Z: target reach of discount set to meet a discount.

15. The apparatus of claim 9, wherein the communication module is configured to transmit the purchase confirmation intention about the interested item to the server, and wherein, when the terminal is located in a third specific region including the range of the first specific region, the communication module receives the range of the first specific region and the information on the purchase item from the server, and

the controller is configured to connect the terminal to a payment system of a seller by the server.

FIG.1

| MESSAGE MANAGER | 201 |
| DATA PROCESSOR | 202 |
| DATA MANAGER | 203 |

# FIG.2

FIG.3

USER
(TERMINAL)                    SERVER                    SELLER

TRANSMIT SPECIFIC REGION
AND INFORMATION ON SALE
ITEM                                          ～401

TRANSMIT ID OF TERMINAL
AND LOCATION INFORMATION
402～

TRANSMIT LIST OF SALE ITEMS
AND RELATED INFORMATION
403～

TRANSMIT INTERESTED ITEM          TRANSMIT UPDATE
404～                                  INFORMATION ON NEW
                                        SELLER OR ITEM
TRANSMIT UPDATE                                    ～405
INFORMATION
406～

TRANSMIT CONFIRMATION
INTENTION ABOUT
INTERESTED ITEM
407～

NOTIFY THAT TARGET              NOTIFY THAT TARGET
DISCOUNT SALE IS POSSIBLE    DISCOUNT SALE IS POSSIBLE
408～                    ●                          ～408

TRANSMIT PURCHASE
CONFIRMATION INTENTION
ABOUT INTERESTED ITEM
409～

CONNECT USER DIRECTLY TO PAYMENT SYSTEM OF SELLER
                                                  ～410

FIG.4

CDR CLIENT

· ON/OFF
· HELP

FIG.5A

TOP CDR AT YOUR
CURRENT LOCATION IS
SANGAM CGV 7PM.

FIG.5B

| CDR : PROVIDENCE PLACE MALL 3RDFL, SAMSUNG SHOP | SELECT CDR |
|---|---|

CRANSTON
PROVIDENCE
NEWPORT

COME CLOSER AND DEAL TO GO!

CURRENT SERVICE

SAMSUNG CALAXY TAB™ 10.1 (32GB)
-ANDROID 3.1 (HENEVCOMB)
-10.1"WXGA TOUCH SCREEN
-WI-FI

| JOIN YOUR DEVICES (CD : COLLECTIVE DISTANCE) 100 → 1000 TO BE DISCOUNT 20% → 30% CURRENT TOTAL CD HERE : 992, DUE : JULY. 2. 2011 | |
|---|---|
| AS IS : 992 | IF YOU JOIN, THEN 992.5 (YOU) / 1000 (TO BE) COME CLOSER! |

FIG.6

Europäisches
Patentamt

European
Patent Office

Office européen
des brevets

# EUROPEAN SEARCH REPORT

**Application Number**

EP 12 18 8052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2010/262449 A1 (MONTEFORTE JEFFREY J [US] ET AL) 14 October 2010 (2010-10-14)<br>* paragraphs [0005], [0049] *<br>* paragraphs [0059], [0060], [0065] *<br>* paragraphs [0081], [0096] *<br>* paragraph [0105] - paragraph [0111] *<br>----- | 1-3,<br>7-11,15<br>4-6,<br>12-14 | INV.<br>H04W4/02<br>H04L29/08<br>G06Q20/16<br>G06Q30/02<br>H04W4/20<br>H04W4/08 |
| X<br><br>A | US 2007/287473 A1 (DUPRAY DENNIS J [US]) 13 December 2007 (2007-12-13)<br>* paragraphs [0002], [0028], [0033], [0061] *<br>* paragraph [0125] - paragraph [0137] *<br>* paragraph [0151] - paragraph [0157] *<br>* paragraphs [0209], [0493], [0496] *<br>* paragraphs [0525], [0528] *<br>* paragraph [0607] - paragraph [0630] *<br>----- | 1-3,<br>7-11,15<br>4-6,<br>12-14 | |
| X<br><br>A | US 2009/203387 A1 (WOLD ROBERT [US] ET AL) 13 August 2009 (2009-08-13)<br>* paragraph [0016] - paragraph [0021] *<br>* paragraph [0037] - paragraph [0045] *<br>* paragraphs [0048], [0050], [0053] *<br>* paragraph [0056] - paragraph [0058] *<br>----- | 1-3,<br>7-11,15<br>4-6,<br>12-14 | **TECHNICAL FIELDS SEARCHED (IPC)**<br>H04W<br>H04L<br>G06Q |
| X<br><br>A | US 2009/157486 A1 (GROSS JOHN NICHOLAS [US]) 18 June 2009 (2009-06-18)<br>* paragraph [0008] *<br>* paragraph [0021] - paragraph [0041] *<br>* paragraphs [0052], [0053], [0057] *<br>* paragraph [0097] *<br>* paragraph [0133] - paragraph [0135] *<br>* paragraphs [0141], [0155], [0157] *<br>* paragraphs [0159], [0162], [0163] *<br>-----<br>-/-- | 1-3,<br>7-11,15<br>4-6,<br>12-14 | |

The present search report has been drawn up for all claims

| Place of search | Date of completion of the search | Examiner |
|---|---|---|
| Munich | 14 February 2013 | Losseau, Dominique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

| | Europäisches Patentamt European Patent Office Office européen des brevets | **EUROPEAN SEARCH REPORT** | Application Number EP 12 18 8052 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2007 0077912 A (THINK TEK [KR]) 30 July 2007 (2007-07-30) * abstract * * A machine traduction of this apllication is available at the KIPO site under: http://kposd.kipo.go.kr:8088/kpion/UP_A01_PatentSearchFileWrapperPdfFrame.jsp?LN=EN& filename=temp/out_PDF_cw_gaz_r_10200600077 87_EN.pdf&AN=1020060007787&DOCTYPE=1&RSNO= null * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 14 February 2013 | Losseau, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 8052

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2013

| Patent document cited in search report | | Publication date | Patent family member(s) | | Publication date |
|---|---|---|---|---|---|
| US 2010262449 | A1 | 14-10-2010 | NONE | | |
| US 2007287473 | A1 | 13-12-2007 | NONE | | |
| US 2009203387 | A1 | 13-08-2009 | NONE | | |
| US 2009157486 | A1 | 18-06-2009 | US | 2009157486 A1 | 18-06-2009 |
| | | | US | 2011288919 A1 | 24-11-2011 |
| | | | US | 2013035988 A1 | 07-02-2013 |
| KR 20070077912 | A | 30-07-2007 | NONE | | |

EPO FORM P0459

For more details about this annex : see Official Journal of the European Patent Office, No. 12/82